# EUROPÄISCHE PATENTANMELDUNG

(11) **EP 2 775 432 A1**
(43) Veröffentlichungstag der Anmeldung: **10.09.2014**
(21) Anmeldenummer: 14155212.5
(22) Anmeldetag: 14.02.2014
(51) Int. Cl.: G06Q 10/08, G06Q 50/28

(54) **Verfahren zur Dokumentation von zumindest einem Parameter eines Objektes und ein System zur Durchführung des Verfahrens**

(30) Priorität: 07.03.2013 DE 102013003914
(71) Anmelder: Rieber AG, 8360 Eschlikon (CH)
(72) Erfinder: Maier, Max, 71636 Ludwigsburg (DE)
(74) Vertreter: Schumacher & Willsau

(57) **Zusammenfassung**

Die vorliegende Erfindung betrifft ein Verfahren (100) zur Dokumentation von zumindest einem Parameter eines Objektes.

Erfindungsgemäß ist vorgesehen, dass eine ablesbare, das Objekt repräsentierende Identifikation (ID) durch ein Lesegerät erfasst wird, dass das Lesegerät mit einer Datenbank verbunden wird, dass das Erfassen der ID eine Erfassung zumindest eines Parameters des Objektes auslöst, und dass die ID zusammen mit dem zumindest einen Parameter des Objektes an die Datenbank übertragen wird.

Die Erfindung betrifft weiterhin ein System, das zur Ausführung des erfindungsgemäßen Verfahrens (100) eingerichtet ist.

## Beschreibung

Die Erfindung betrifft ein Verfahren zur Dokumentation von zumindest einem Parameter eines Objektes.

Die vorliegende Erfindung betrifft weiterhin ein System, das zur Durchführung des erfindungsgemäßen Verfahrens eingerichtet ist.

Das heutige Prinzip des Verpackens und Lieferns von Lebensmitteln beinhaltet Vakuumieren, vorzugsweise in Kunststoffbeuteln, mit Schutzatmosphäre versehen oder Tiefgefrieren.

Der Vorteil des Vakuumierens ist lange Haltbarkeit, da Sauerstoff entnommen worden ist. Nachteilig ist, dass die Lebensmittel in direktem Kontakt mit Kunststoff sind, nicht vor Lichteinstrahlung geschützt sind, kein Schutz vor mechanischer Einwirkung besteht und das Ganze optisch nicht schön anzusehen ist.

Die Vorteile des Arbeitens mit Schutzatmosphäre sind lange Haltbarkeit, da Sauerstoff durch Gas ersetzt wird, und ein optisch besseres Erscheinungsbild. Die Nachteile sind, dass die Lebensmittel ebenfalls in direktem Kontakt mit Kunststoff sind, dass kein Schutz vor Lichteinstrahlung besteht, und dass auch kein Schutz vor mechanischer Einwirkung besteht.

Das Tiefgefrieren hat die Vorteile lange Haltbarkeit, da niedrige Temperatur, und optisches besseres Erscheinungsbild. Die Nachteile sind ein direkter Kontakt der Lebensmittel mit Kunststoff, ein sehr hoher Energieverbrauch bei der Lagerung, ein sehr hoher Energieverbrauch bei der Zubereitung, Verlust von Qualität, Vitaminen und Nährstoffen sowie Zerstörung der Zellstruktur.

Die Tatsache, dass durch dieses heutige Prinzip unzählige Tonnen Müll produziert werden, 35 % der Lebensmittel weggeworfen werden und die Lebensmittel überdies durch den Kunststoff kontaminiert werden (genauer, durch den im Kunststoff enthaltenen Weichmacher), sind oben bereits angesprochen worden.

Um eine den gewünschten hohen Qualitätsansprüchen und den einschlägigen gesetzlichen Bestimmungen entsprechenden Zustand von Lebensmitteln bei der Auslieferung/Lagerung zu gewährleisten, ist insbesondere eine lückenlose Dokumentation der Lieferkette und des Zustands der transportierten Lebensmittel notwendig. In der Regel erfolgt diese Dokumentation an der Ware beziehungsweise an den die Ware enthaltenden Behältern. Dies hat den Nachteil, dass die Dokumentation nur bei direktem Kontakt mit der Ware oder den Behältern zugänglich ist. Weiterhin kann die Dokumentation leicht beim Transport beschädigt werden, beispielsweise durch unsachgemäßes Erhitzen der Behälter, wenn diese die Dokumentation in Form eines Speicherchips enthalten. Diese Problematik besteht allgemein bei allen Produkten, die auf einen sachgemäßen und kontrollierten Transport und eine entsprechende Lagerung angewiesen sind. Auch hinsichtlich der Verpackung der Produkte können bestimmte Anforderungen einzuhalten sein. Weiterhin kann durch die bisherige Lösung einer Dokumentation an der Ware prinzipiell keine Dokumentation über einen Zustand des Lagerortes erstellt werden.

Aufgabe der Erfindung ist es, diese Nachteile und Probleme zu beseitigen.

Erfindungsgemäß ist vorgesehen,
- dass eine ablesbare, das Objekt repräsentierende Identifikation (ID) durch ein Lesegerät erfasst wird,
- dass das Lesegerät mit einer Datenbank verbunden wird,
- dass das Erfassen der ID eine Erfassung zumindest eines Parameters des Objektes auslöst, und
- dass die ID zusammen mit dem zumindest einen Parameter des Objektes an die Datenbank übertragen wird.

Die Datenbank kann den zumindest einen digital erfassten Parameter zusammen mit oder verknüpft mit der Identifikation für eine spätere Abfrage und/oder Weiterverarbeitung speichern. Durch das digitale Erfassen der ID mit dem Lesegerät wird dementsprechend die digitale Erfassung zumindest eines Parameters des Objektes initiiert. Als Objekt kann in diesem Zusammenhang nahezu jeder Gegenstand, beispielsweise ein Behälter für Lebensmittel, ein Kühlhaus oder eine Blutkonserve, dienen, sofern die ID mit dem jeweiligen Objekt und/oder mit dessen Ort verknüpft ist. Die Initiierung der Erfassung des zumindest einen Parameters kann beispielsweise ein automatisierte Erfassung und/oder eine zumindest teilweise manuelle Erfassung des zumindest einen Parameters umfassen. Während einer zumindest teilweise manuellen Erfassung können beispielsweise schriftliche und/oder akustische Eingaben digital erfasst werden. Durch die Übertragung der ID zusammen mit dem zumindest einen erfassten Parameter an die Datenbank kann eine zentrale Verfügbarkeit des zumindest einen erfassten Parameters des identifizierten Objektes erreicht werden. Auf diese Weise kann beispielsweise eine Überwachung/Abstimmung mehrerer voneinander entfernter Lagerräume aufeinander realisiert werden, wobei beispielsweise auch eine vorteilhafte Abstimmung von Temperaturen der eventuell überwachten Lagerräume auf einen zu erwartenden ungekühlten/ungeheizten Transportweg eines gelagerten Produktes, beispielsweise zwischen den eventuell überwachten Lagerräumen, anhand gespeicherter erfasster Parameter erkannt werden kann. Die Anpassung der Temperaturen kann dann dergestalt erfolgen, dass eine vorgesehene Temperatur eines ersten eventuell überwachten Kühlraumes beispielsweise abgesenkt wird, wenn aufgrund von erfassten Parametern erkannt wird, dass von dem ersten eventuell überwachten Kühlraum zu einem zweiten überwachten Kühlraum transportierte Produkte, die überwacht werden, beim Eintreffen in dem zweiten Kühlraum regelmäßig eine unerwünscht hohe Temperatur aufweisen. Auf die gleiche Weise lassen sich Hygiene-Kontrollpunkte überwachen, in denen Hygiene-Informationen, wie zum Beispiel HACCP-Daten, eingegeben werden. Die QR-Codes dienen dabei der exakten Identifikation eines Kontrollpunktes. Durch die Kombination von QR-Code und Temperaturmessung, beziehungsweise durch QR-Code und Hygieneinformation ergibt sich eine eindeutige Zuordnung und somit die sichere Erstellung von digitalen HACCP-Listen.

Nützlicherweise kann vorgesehen sein, dass die Erfassung des zumindest einen Parameters des Objektes durch zumindest einen Sensor erfolgt, und dass Messungen des zumindest einen Sensors durch die Datenbank veranlasst und ausgewertet werden. Auf diese Weise kann eine lückenlose digitale Erfassung der durch die Sensoren erfassbaren Messwerte oder Parameter initiiert werden. Insbesondere kann ein versehentliches Vergessen der Erfassung relevanter Messwerte/Parameter ausgeschlossen werden. Die Datenbank erinnert an die notwendigen Messungen/Erfassungen und/oder lässt diese automatisch durch den zumindest einen Sensor durchführen. Die Dokumentation der Parameter ist dementsprechend als vollständig anzusehen.

Vorteilhafterweise kann vorgesehen sein, dass der zumindest eine Sensor drahtlos ferngesteuert wird und/oder drahtlos ausgelesen wird. Somit kann eine weitere Automatisierung der Erfassung erzielt werden, so dass auch ein mutwilliges/vorsätzliches Auslassen/Verfälschen von möglichen Messungen/Erfassungen ausgeschlossen werden kann. Beispielsweise kann der zumindest eine Sensor an einem optimalen Mess-/Erfassungspunkt fest an dem mithilfe der ID erkannten/identifizierten Objekt angeordnet sein und über eine drahtlose Funkschnittstelle mit dem Lesegerät kommunizieren. Die Kommunikation kann bidirektional sein.

Es kann auch vorgesehen sein, dass die ID als ein optoelektronisch lesbarer Barcode oder QR-Code ausgeführt wird. Ein entsprechender optoelektronisch lesbarer Barcode oder QR-Code kann leicht und zuverlässig erfasst werden, um das Objekt zu identifizieren. Die ID kann je nach Bedarf direkt an dem zu erfassenden Objekt angeordnet sein oder, falls dies nicht möglich ist, zumindest in der Nähe des Objekts angeordnet sein. Beispielsweise kann die ID auf einer äußeren Oberfläche eines Kühlschranks oder eines Behälters angeordnet sein. Denkbar ist auch die Anordnung der ID neben einer zu einem zu erfassenden Kühlraum führenden Tür. Insbesondere, wenn auch nicht ausschließlich, in den drei vorstehend genannten Fällen kann beispielsweise auf ein Öffnen des identifizierten Objektes zum Messen/Erfassen des zumindest einen Parameters verzichtet werden, wenn der zumindest eine Sensor zur Erfassung des zumindest einen Parameters fest innerhalb des erfassten Objektes angeordnet ist und mit dem Lesegerät gekoppelt ist. Dies ist zum einen energiesparend und verfälscht weiterhin nicht den zu erfassenden Messwert/Parameter durch das Öffnen des Objektes.

Nützlicherweise kann vorgesehen sein, dass die Verbindung des Lesegerätes zu der Datenbank durch ein Smartphone hergestellt wird. Auf diese Weise kann eine direkte Übertragung und Aktualisierung der in der Datenbank gespeicherten Information über das erfasste Objekt erreicht werden. Ein Smartphone kann weiterhin eine weit verbreitete mobile Plattform bereitstellen, über die zuverlässig die Kommunikation/Datenübertragung zwischen der Datenbank und dem zumindest einen Sensor abgewickelt werden kann. Vorteilhafterweise kann vorgesehen sein, dass das Lesegerät ein Smartphone ist. Auf diese Weise kann das Verfahren bereits bei seiner Einführung auf eine bereits vorhandene breite Hardwarebasis zurückgreifen. Lediglich die Datenbank, die zur Kommunikation zwischen Datenbank und Smartphone notwendige Software und eventuell zumindest ein an den zu erfassenden Parameter angepasster Sensor sind zur Umsetzung des Verfahrens zusätzlich bereitzustellen, während die gesamte zur Kommunikation notwendige Infrastruktur bereits vorhanden ist.

Es kann auch vorgesehen sein, dass die Datenbank jede ID mit dem mindestens einen zugeordneten zu erfassenden Parameter speichert. Auf diese Weise kann durch die Datenbank überprüft werden, ob die zur Dokumentation notwendigen Parameter erfasst werden, und es können gegebenenfalls lückenhafte Erfassungen dokumentiert/moniert werden.

Das zur Ausführung des erfindungsgemäßen Verfahrens eingerichtete System umfasst neben dem Lesegerät, der ID und der Datenbank den zumindest einen Sensor, der zur Erfassung des zu dokumentierenden Parameters geeignet sein muss.

Ein entsprechendes System zur Ausführung des erfindungsgemäßen Verfahrens kann zu einem erweiterten System für den Verkauf und/oder die Lieferung von verpackten Produkten erweitert werden. Zu diesem Zweck kann über die als Plattform im Internet eingerichtete Datenbank, auch eine Steuerung und Überwachung von den Verkauf und/oder die Lieferung betreffenden Transaktionen zwischen Anbieter- und Nachfragerstationen verwaltet/überwacht werden.

Bei einem solchen erweiterten System der oben genannten Art kann vorgesehen sein, dass die Datenbank auch dafür ausgebildet ist, das Angebot der Anbieterstationen den Nachfragerstationen zu präsentieren und zwischen Anbieter- und Nachfragerstationen direkten oder indirekten Kontakt herzustellen, um als verpackte Produkte in Mehrwegbehälter gefüllte Produkte einer Nachfragerstation in einem festgelegten und überwachten Zustand direkt oder über eine Zwischenstation zu liefern, wobei jeder Mehrwegbehälter durch eine von außen ablesbare Identifikation (ID) eindeutig gekennzeichnet ist, wobei jeder Station ein Lesegerät zugeordnet ist, das wenigstens zum Ablesen der ID ausgebildet ist, wobei jedes Lesegerät mit der Datenbank bidirektional verbindbar oder verbunden ist, wobei das Lesegerät und/oder die Datenbank so ausgebildet ist, dass jeder ID-Ablesevorgang jedes Lesegeräts weitere Lesevorgänge desselben auslöst, wobei jedem Lesegerät Sensoren zugeordnet sind, die bei den weiteren Lesevorgängen veranlasst werden, Parameter wie Benutzer, Standort, Zeit, Temperatur, Druck und Umgebungsatmosphäre jedes Produkts zu messen und über das Lesegerät in die Datenbank einzugeben. Auf diese Weise kann die Dokumentation räumlich von den transportierten Produkten getrennt werden, so dass eine globale Zugänglichkeit ermöglicht wird und gleichzeitig die Dokumentation vor Beschädigungen geschützt wird. Das vorgeschlagene erweiterte System kann auch für beliebige Produkte verwendet werden, insbesondere für solche Produkte, die auf einen sachgemäßen und kontrollierten Transport und eine entsprechende Lagerung angewiesen sind, beispielsweise Lebensmittel, Pharmazeutika und Elektronik-Bauteile.

In einer vorteilhaften Ausgestaltung des erweiterten Systems kann vorgesehen sein, dass eine Lieferstation für Mehrwegbehälter, insbesondere Pfand-Mehrwegbehälter, die mit einem abnehmbaren Deckel vakuumdicht verschließbare Speisenbehälter, insbesondere metallische GN-Behälter, sind und bei Bedarf zusätzlich eine Schutzgasatmosphäre enthalten können, mit jeder Anbieterstation in Verbindung bringbar ist, um diese mit Mehrwegbehältern zu beliefern. Die Lieferstation kann beispielsweise GN-Behälter aus nichtrostendem Stahl, die als Mehrwegbehälter eingesetzt werden, an die Teilnehmer verteilen. Edelstahl in Verbindung mit Sauerstoff und Feuchtigkeit neutralisiert Gerüche. Da kein Kunststoff mit den Lebensmitteln in Kontakt kommt, können diese auch nicht durch Weichmacher kontaminiert werden. Nichtrostender Stahl ist hygienisch, lebensmittelecht, geruchlos, robust, spülmaschinentauglich und einfach zu reinigen. Außerdem sind solche Mehrwegbehälter optimal stapelbar. Der Schutz der Lebensmittel kann bei dem erweiterten System insbesondere durch Vakuumieren und/oder Schutzgasatmosphäre erfolgen.

Weiterhin kann in einer Ausgestaltung des erweiterten Systems vorgesehen sein, dass eine Sammelstation für die Rückgabe von Mehrwegbehältern, insbesondere Pfand-Mehrwegbehältern, zwischen die Nachfragerstation und die Lieferstation für Mehrwegbehälter schaltbar oder geschaltet ist. Somit kann auch eine effiziente zentrale Wiederverwertung der Mehrwegbehälter sichergestellt werden.

Vorteilhafterweise kann vorgesehen sein, dass die Identifikation als ein optoelektronisch lesbarer Barcode oder QR-Code dargestellt ist. Ein Barcode oder ein QR-Code ist ein gegenüber Beschädigungen und einfachen Manipulationen robuster Informationsträger, der leicht dauerhaft beispielsweise mit den Mehrwegbehältern gekoppelt werden kann. Beispielsweise kann die Identifikation auf die Mehrwegbehälter lackiert, geklebt oder in die Mehrwegbehälter eingestanzt sein.

In einer besonderen Ausführungsform des erweiterten Systems kann vorgesehen sein, dass die bidirektionale Verbindung durch ein Smartphone herstellbar ist. Auf diese Weise können bereits "vorhandene" Geräte nach dem Prinzip "bring your own device" als Lesegerät eingesetzt werden. Zusätzliche kostenintensive Investitionen in Infrastruktur können daher bei dem vorgeschlagenen erweiterten System vermieden werden. Dies gilt natürlich auch für das erfindungsgemäße Verfahren und das nicht erweiterte System.

Es kann auch vorgesehen sein, dass die Datenbank dafür ausgebildet ist, für jeden Behälter/Deckel und die für jeden Behälter/Deckel zu messenden Parameter wie Identifikation, Standort, Benutzer, Druck, Temperatur, Zeit und Umgebungsatmosphäre eine Kanban-Karte zu führen.

Die Datenbank kann Bestandteil einer Internet-Plattform sein, die dafür ausgebildet ist, das Angebot der Anbieter den Nachfragern zu präsentieren und zwischen Nachfrager und Anbieter direkten oder indirekten Kontakt herzustellen, um als verpackte Lebensmittel durch den Anbieter in Mehrwegbehälter gefüllte Speisen dem Nachfrager warmgehalten oder gekühlt zu liefern. Andere Produkte, beispielsweise Pharmazeutika und Elektronik-Bauteile, können ebenfalls mithilfe der vorgeschlagenen Datenbank logistisch organisiert werden.

Diese Internet-Plattform ist eine Online-Plattform, auf der jeder, der mit Lebensmitteln sein Geld verdient (Food-Produzenten, Food-Händler, Food-Verteiler usw.) Produkte anbieten oder kaufen kann. Zu den Anbietern können also der Bauer, der Metzger und der Erzeuger gezählt werden, zu den Nachfragern können die Gastronomie, die Hotellerie, Caterer und Care gezählt werden, insbesondere können der Grossist, der Einzelhändler und der Supermarkt dazu gezählt werden. Im Falle von Pharmazeutika oder Elektronik-Bauteilen sind andere Anbieter und Nachfrager vorhanden.

Das Transportgut sind frische Lebensmittel aller Art, ob Gemüse, Fisch oder Fleisch. Pharmazeutika und Elektronik-Bauteile sind ebenso als Transportgut möglich. Gemäß dem vorgeschlagenen erweiterten System werden die verwendeten Behälter mit einer von außen ablesbaren Identifikation gekennzeichnet. Die verwendeten Behälter können, insbesondere metallische Behälter sein, die mit einem vakuumdichten Deckel verschließbar sind, vakuumierbar sind oder mit Schutzatmosphäre versehen werden können. Für Temperatur- und Transportschutz können für Lebensmittel beispielsweise sogenannte Thermoports der Fa. Rieber eingesetzt werden. Die Deckel zum vakuumdichten Verschließen der Behälter haben ein intelligentes Sensorventil zur Überwachung von Temperatur, Druck und Zeit sowie zum Austausch von Daten für Sicherheit und Logistik. Die Thermoports sind mit einem intelligenten Chip versehen zur Überwachung von Temperatur, Zeit sowie Austausch von Daten für Sicherheit und Logistik. Die Sensoren und/oder der Chip können bei dem vorgeschlagenen erweiterten System über die Datenbank angesprochen und insbesondere ausgelesen werden. Für die Logistik wird vorzugsweise eine bereits bestehende Infrastruktur eingesetzt wie zum Beispiel DHL, UPS usw. Die Thermoports sind ebenso wie die GN-Behälter jeweils Teil eines Mehrweg-Systems und garantieren 100 % Sicherheit und 80 % weniger Abfälle, 60 % mehr Vitamine und 50 % weniger Energie.

Die durch das erweiterte System nach der Erfindung erzielten Vorteile sind
- Verlagerung der Dokumentation von den transportierten Gütern weg in eine entfernte zentrale Datenbank, die von überall zugänglich ist;
- Reduzierung der notwendigen Infrastruktur, da die einzelnen Behälter nur noch eine einfache von außen erfassbare Identifikation benötigen; und
- nachvollziehbare und lückenlose Dokumentation des Transportweges und des jeweiligen Zustands der transportierten Güter.

Zur Vereinfachung wird im Folgenden regelmäßig nur auf den Transport und die Überwachung von Lebensmitteln aller Art eingegangen. Wie bereits erwähnt sind andere Produkte/Objekte, beispielsweise Pharmazeutika und Elektronik-Bauteile ebenfalls vorgesehen.

Die Datenbank kann Teil einer Internet-Plattform sein, die Anbieter und Nachfrager zusammenführt. Diese Internet-Plattform leistet weiter für die am System Beteiligten
- fertige Menüs oder Lebensmittel bestellen;
- Einsatz von Apps als Software-Tools usw.;
- Infrastruktur-Komponenten lassen sich kaufen, leasen oder mieten; und
- Abrechnungs- und Warenwirtschaftssysteme (Mietsoftware) bis hin zu Server-Infrastruktur einschließlich Mailsystemen.

Die Internet-Plattform bildet die sogenannte Storefront für Produktpräsentation, Registrierung von Kunden und Bestellung, Logistik, Softwaretools als Dienstleistung wie zum Beispiel Berechnung erforderlicher Mengen, Garstufen und -zeiten und schließlich Qualitätssicherung (HACCP).

Große Caterer mit vielen großen und kleineren Standorten, die viele unprofitable Betriebsrestaurants (vor allem mit unter 150 Essen) unterhalten oder beliefern, und zwar genügend Großküchen in der Nähe haben, die aber alle nicht auslasten können, können von dem erweiterten System besonders profitieren, denn das ermöglicht Restrukturierung von kleinen Einheiten durch Umstellung auf Anlieferung auf der Basis des erweiterten Systems, zusätzliche neue kleinere Kunden in der Region können erschlossen werden (Auslastung der Großküchen, zusätzliches Wachstum), die Handhabung des Bestellwesens, der Abrechnung und der Logistik können über das erweiterte System erfolgen, machen also bei den Teilnehmern des erweiterten Systems keine zusätzliche Manpower erforderlich.

Ein großer Lebensmittelhändler kann von dem erweiterten System profitieren durch das Beziehen von vorgefertigten Menüs oder von Menü-Komponenten, Nutzung von Kapazitäten an lokalen Standorten, Angeboten zum Beispiel in Tankstellen, aber auch Belieferung von Großkunden wie zum Beispiel Restaurants über Online-Bestellungen. Über das erweiterte System kann die Anbindung an internes Bestellwesen und Planung erfolgen. Es können Logistik- und Qualitätssicherungsprobleme gelöst werden.

Ausführungsbeispiele der Erfindung werden im Folgenden unter Bezugnahme auf die Zeichnungen näher beschrieben, wobei gleiche Bezugszeichen gleiche oder gleichartige Teile bezeichnen.

Es zeigen:
- Figur 1: ein Flussdiagramm eines Verfahrens;
- Figur 2: eine schematische Darstellung eines Lesegerätes mit einem zugeordneten mindestens einen Sensor;
- Figur 3: eine schematische Darstellung eines Systems, das zur Ausführung des Verfahrens gemäß Figur 1 eingerichtet ist;
- Figur 4: ein Ausführungsbeispiel eines erweiterten Systems; und
- Figur 5: eine schematische Darstellung eines Lesegeräts mit zugeordneter Sensorik.

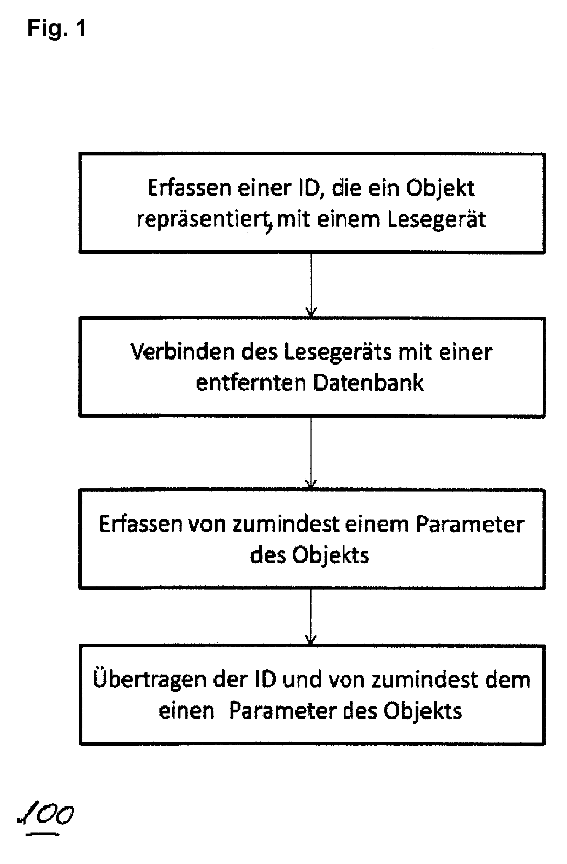

Figur 1 zeigt ein Flussdiagram eines Verfahrens. Ein in Figur 1 dargestelltes Verfahren 100 beginnt in einem ersten Schritt mit dem Erfassen einer ID, die ein Objekt oder einen Ort eines Objekts repräsentiert, mit einem Lesegerät. In einem zweiten Schritt kann sich das Lesegerät mit einer entfernten Datenbank verbinden beziehungsweise mit der entfernten Datenbank verbunden werden. In einem dritten Schritt wird zumindest ein Parameter des Objekts erfasst. Beispielsweise mit Hilfe einer Sensorik, die zumindest einen Sensor umfasst, der zur Erfassung des zumindest ein Parameters geeignet ist. In einem vierten Schritt werden die ID und der zumindest eine Parameter des Objekts an die entfernte Datenbank übertragen.

Schritt zwei, dass heißt das Verbinden des Lesegeräts mit der entfernten Datenbank, kann auch an einer anderen Stelle des Verfahrens 100 vorgesehen sein. Beispielsweise kann vorgesehen sein, dass das Verbinden des Lesegerätes mit der entfernten Datenbank bereits vor dem Erfassen der ID erfolgt. Es kann aber auch vorgesehen sein, dass das Verbinden des Lesegeräts mit der entfernten Datenbank erst nach dem Erfassen des zumindest einen Parameters des Objekts durch die Sensorik vorgesehen ist.

Wenn das Verbinden des Lesegeräts mit der entfernten Datenbank vor dem Erfassen des zumindest einen Parameters des Objekts bei dem Verfahren 100 vorgesehen ist, kann das Erfassen des zumindest einen Parameters des Objekts durch die entfernte Datenbank ausgelöst werden, an die die erfasste ID direkt nach dem Verbinden des Lesegeräts mit der entfernten Datenbank übertragen werden kann. In diesem Fall kann bei Schritt vier auf das gemeinsame Übertragen der ID und des zumindest einen erfassten Parameters des Objekts verzichtet werden und stattdessen lediglich der zumindest eine erfasste Parameter des Objekts einzeln übertragen werden, um Bandbreite zu sparen. Wenn das Erfassen von zumindest einem Parameter des Objekts durch die entfernte Datenbank ausgelöst wird, können Informationen, welche Parameter zu erfassen sind, in der entfernten Datenbank hinterlegt sein und als Reaktion auf das Übertragen der erfassten ID an die entfernte Datenbank in der entgegengesetzten Richtung an das Lesegerät übertragen werden. Alternativ ist auch möglich, dass die ID bereits die Informationen über die zu erfassenden Parameter des Objekts enthält und/oder dass standardmäßig sämtliche erfassbaren Parameter des Objekts erfasst werden, sobald die ID des Objekts erfasst ist.

Das Erfassen des zumindest einen Parameters des Objekts kann auch schriftliche und/oder akustische Informationen erfassen, die ein Benutzer des Lesegeräts auf Aufforderung nach der Erfassung der ID dem Lesegerät eingibt. Auf diese Weise können zusätzliche Informationen zur Auswertung in die Datenbank übernommen werden. Beispielsweise können Beschädigungen und/oder Defekte des Objekts zeitnah gemeldet und/oder beseitigt werden.

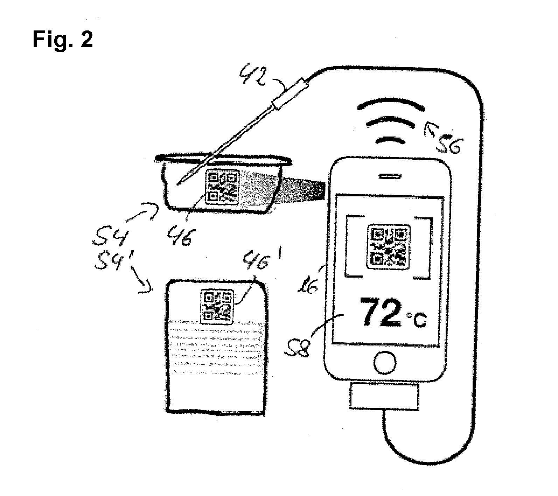

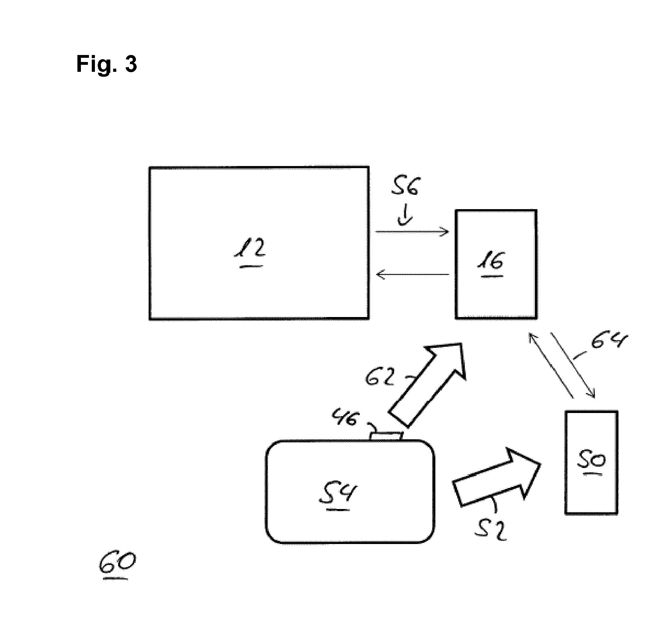

Figur 2 zeigt eine schematische Darstellung eines Lesegeräts mit mindestens einem zugeordneten Sensor. Ein dargestelltes Lesegerät 16 ist mechanisch durch ein Signalkabel mit einem Temperatursensor 42 gekoppelt. Das Lesegerät 16 kann beispielsweise, wie in Figur 2 dargestellt, als Smartphone ausgeführt sein. Der Temperatursensor 42 kann alternativ auch über eine Funkverbindung mit dem Lesegerät 16 verbunden sein. Das Lesegerät 16 kann beispielsweise über eine Funkverbindung 56 mit einer in Figur 2 nicht dargestellten entfernten Datenbank 12 (Figur 3) verbunden sein. Neben dem Lesegerät 16 sind ein Objekt 54 und ein weiteres Objekt 54' dargestellt, die jeweils eine Identifikation 46 beziehungsweise eine weitere Identifikation 46' aufweisen. Das Objekt 54 kann beispielsweise ein Gastronorm-Behälter sein, der zur Aufnahme und/oder kurzfristigen Lagerung von verderblichen Lebensmitteln geeignet ist. Eine das Objekt 54 kennzeichnende Identifikation 46 kann auf einer Außenseite des Objekts 54 angeordnet sein. Die Identifikation 46 kann beispielsweise, wie in Figur 2 dargestellt, als QR-Code ausgeführt sein. Alternativ kann die Identifikation 46 auch als Barcode ausgeführt sein. Die Identifikation 46 kann beispielsweise optisch mit Hilfe einer Kamera (zum Beispiel der eines Smartphones) und/oder eines Laserscanners durch das Lesegerät 16 erfasst werden. Aufgrund der Erfassung der Identifikation 46 kann eine Erfassung eines Parameters, im vorliegenden Fall beispielhaft der Temperatur, mit Hilfe der an das Lesegerät 16 angeschlossenen Sensorik, dass heißt dem Temperaturfühler 42, ausgelöst werden. Die Erfassung des Parameters kann beispielsweise direkt durch die Erfassung der Identifikation 46 ausgelöst werden. Möglich ist auch, dass die Erfassung der Temperatur nach einer Rückfrage in der in Figur 2 nicht dargestellten Datenbank initiiert wird, in welcher bereits abgespeichert ist, dass bei dem identifizierten Objekt 54 die Temperatur zu erfassen ist. Auf einer optischen Anzeige 58 des Lesegerätes können beispielsweise die Identifikation 46 und der erfasste Parameter für einen manuellen Abgleich und/oder eine manuelle Ergänzung durch einen Benutzer des Lesegerätes dargestellt werden. Beispielsweise können zusätzliche schriftliche Ergänzungen betreffend Beschädigungen und/oder den Allgemeinzustand des identifizierten Objekts 54 eingetragen werden.

Aufgrund der individuellen Kennzeichnung des Objekts 54 und des weiteren Objekts 54' mit der Identifikation 46 beziehungsweise der weiteren Identifikation 46' kann auch bei räumlich dicht bei einander angeordneten Objekten 54, 54' eine sichere getrennte Erfassung der Parameter der jeweiligen Objekte sichergestellt werden.

Darüber hinaus kann noch eine Verknüpfung der Identifikation 46 und der weiteren Identifikation 46' vorgenommen werden. Beispielsweise kann das weitere Objekt 54' ein Großgebinde oder eine aktiv kühlende Vorrichtung, beispielsweise ein Kühlschrank, sein, die zur Aufnahme des Objekts 54 geeignet ist beziehungsweise ein Bestandteil des Objekts 54 ist. In diesem Fall kann beispielsweise nach der Erfassung der Identifikation 46 auch die weitere Identifikation 46' erfasst werden, wobei in der entfernten Datenbank sinngemäß die Identifikation abgelegt wird, dass das Objekt 54 als Teil beziehungsweise im Inneren des weiteren Objekts 54' angeordnet/gelagert ist.

Figur 3 zeigt eine schematische Darstellung eines System, das zur Ausführung des erfindungsgemäßen Verfahrens einrichtet ist. Ein dargestelltes System 60 umfasst eine Datenbank 12, die über eine Funkverbindung 56 mit einem Lesegerät 16 verbunden oder verbindbar ist. Das Lesegerät 16 ist seinerseits über eine Verbindung 64 mit einer Sensorik 50 verbunden. Die Sensorik 50 und die Verbindung 64 können auch interne Bestandteile des Lesegerätes 16 sein, beispielsweise eine Uhr, deren Wert, das heißt die Uhrzeit, über die Funkverbindung 64 als erfasster Parameter 52 an die Datenbank 12 übertragbar sein kann. Das System 60 umfasst weiterhin eine an einem Objekt angeordnete Identifikation 46, die als erfasste ID 62 durch das Lesegerät 16 optisch erfassbar ist. Als Reaktion auf das Erfassen der Identifikation 46 kann durch die Sensorik 50, die zumindest einen Sensor umfasst, zumindest ein Parameter 52 des Objekts 54 erfasst werden.

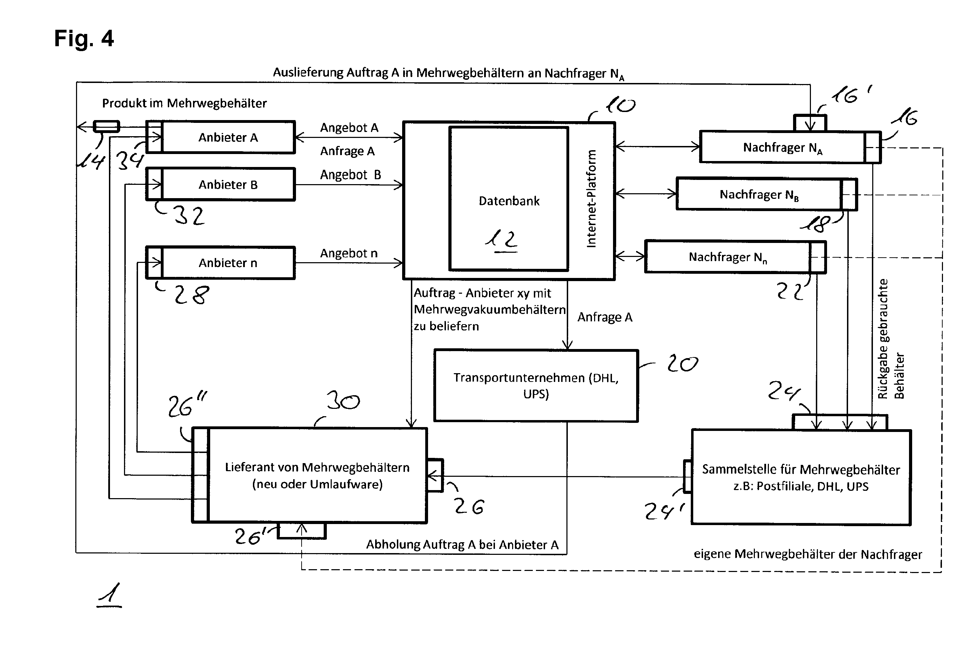

In Figur 4 ist ein erweitertes System 1 für den Verkauf von verpackten Lebensmitteln über eine Internet-Plattform 10, die zwischen Anbietern A, B, ...n und Nachfragern N_{A}, N_{B}...Nₙ geschaltet ist, schematisch dargestellt. Die Internet-Plattform 10 ist dafür ausgebildet, das Angebot der Anbieter A, B, ...n den Nachfragern N_{A}, N_{B}, ...Nₙ zu präsentieren und zwischen Nachfrager und Anbieter direkten oder indirekten Kontakt herzustellen, um als verpackte Lebensmittel durch den Anbieter in Mehrwegbehälter 14 (symbolhaft dargestellt) gefüllte Speisen dem Nachfrager warmgehalten oder gekühlt zu liefern. Wenn hier von "Nachfrager" und "Anbieter" die Rede ist, so handelt es sich, genau genommen, nicht um eine Person oder Firma an sich, sondern um eine Datenstation, die zu einem bidirektionalen Datenaustausch mit der Internet-Plattform 10 in der Lage ist. Entsprechendes gilt für einen Lieferanten 30, eine Sammelstelle 40 oder ein Transportunternehmen 20, die weiter unten erläutert sind. Die Internet-Plattform 10 umfasst eine Datenbank 12, die insbesondere im Zusammenhang mit den Lebensmitteln erfasste Informationen, zum Beispiel Temperatur, Druck, Uhrzeit, Ort, enthält. Die Datenbank 12 kann als zentraler Bestandteil der Internet-Plattform 10 angesehen werden, der im Wesentlichen alle notwendigen Funktionen des erweiterten Systems 1 steuert.

Wenn zum Beispiel ein Nachfrager N_{A} oder dessen Datenstation durch Abfrage der Internet-Plattform 10 festgestellt hat, dass ein Anbieter A für eine Anfrage A des Nachfragers N_{A} ein interessantes Angebot A hat, so kann er über die Internet-Plattform 10 direkt dem Anbieter A den Auftrag erteilen, ihn mit dem angebotenen Produkt zu beliefern. Die notwendigen Informationen hat die Internet-Plattform in der Datenbank 12 gespeichert. Der Anbieter A wird das Produkt in Mehrwegbehälter 14 füllen und über eine bei ihm oder bei dem Nachfrager N_{A} vorhandene Logistik die Auslieferung des Auftrags A an den Nachfrager N_{A} veranlassen. Dieser kurze Weg von dem Nachfrager N_{A} wird die Internet-Plattform 10 zu dem Anbieter A und von diesem zu dem Nachfrager N_{A} 40 anbieten, wenn der Nachfrager N_{A} eine Privatperson, ein kleinerer Einzelhändler und dergleichen ist. Der Nachfrager N_{A} könnte in diesem Fall auch, sofern er seine eigene Logistik für die Anlieferung des Auftrags A an ihn einsetzt, seine eigenen Mehrwegbehälter zu dem Anbieter A transportieren, diese befüllen lassen und dann anschließend zu dem Ort transportieren lassen, an dem sich der Nachfrager N_{A} befindet, oder zu dem Ort, wohin der Auftrag A geliefert werden soll. Entsprechend können die übrigen Nachfrager N_{B}...Nₙ und die übrigen Anbieter B...n verfahren, um auf einen Auftrag B...n hin diesen Auftrag direkt mit dem Nachfrager abzuwickeln, der den Auftrag gegeben hat. Bei einem Caterer, einem Gastronomiebetrieb, einer Kantine od. dergleichen dürfte dieser direkte Kontakt zwischen Nachfrager und Anbieter über die Internet-Plattform mangels geeigneter Logistik kaum nutzbar sein.

Deshalb wird in solchen Fällen die Internet-Plattform 10 zwischen Nachfrager und Anbieter einen indirekten Kontakt herstellen. Zu diesem Zweck ist ein Transportunternehmen 20 durch die Internet-Plattform 10 wahlweise mit jedem Anbieter A, B, ...n verbindbar, um eine bei der Internet-Plattform 10 eingegangene Bestellung eines Nachfragers N_{A}, N_{B}... Nₙ bei dem betreffenden Anbieter abzuholen und dem Nachfrager zu liefern. In Figur 4 ist das durch den nach unten gerichteten rechten Pfeil "Anfrage A" zwischen der Internet-Plattform 10 und dem Transportunternehmen 20 dargestellt. Bei dem Transportunternehmen 20 kann es sich um ein etabliertes Logistikunternehmen wie DHL, UPS usw. handeln. Das Transportunternehmen 20 wird zum Beispiel ein Fahrzeug zu dem betreffenden Anbieter, hier als Beispiel zu dem Anbieter A schicken, um die betreffenden Produkte, die durch den Anbieter A in Mehrwegbehälter gefüllt worden sind, dort abzuholen und bei dem Nachfrager N_{A} auszuliefern, wie es in Figur 4 oberhalb der Internet-Plattform 10 angedeutet ist.

Ein Lieferant 30 von Mehrwegbehältern, hier wieder durch dessen bidirektionale Datenstation symbolisiert, insbesondere von Pfand-Mehrwegbehältern, die mit einem abnehmbaren Deckel vakuumdicht verschließbare Speisenbehälter, insbesondere metallische GN-Behälter sind und bei Bedarf zusätzlich eine Schutzatmosphäre enthalten können, ist mit jedem Anbieter A, B ... n in Verbindung bringbar, um diesen mit Mehrwegbehältern zu beliefern. Die letztgenannte Variante ist in Figur 4 durch eine gestrichelte Verbindung zwischen den Nachfragern N_{A}, N_{B}..., Nₙ und dem Lieferanten 30 mit gestrichelten Linien angedeutet. Selbstverständlich könnten die Nachfragen N_{A}, N_{B}... N_{N} die Anbieter A, B, ...n auch direkt mit ihren eigenen Mehrwegbehältern beliefern. Außerdem könnten die Anbieter A, B ... n ihre eigenen Mehrwegbehälter einsetzen, statt sich mit solchen Behältern beliefern zu lassen.

Weiter ist gemäß der Darstellung in Figur 4 eine Sammelstelle 40 für die Rückgabe von Mehrwegbehältern, insbesondere Pfand-Mehrwegbehältern, zwischen die Nachfrager N_{A}, N_{B}..., Nₙ und den Lieferanten 30 schaltbar oder geschaltet. Wenn die Nachfrager eine geeignete Ausrüstung zum Reinigen der Mehrwegbehälter hätten, könnten diese auch die Sammelstelle umgehen und den Lieferanten 30 oder direkt die Anbieter A, B, ...n mit den gereinigten Mehrwegbehältern beliefern.

Die Sammelstelle 40, die bei dem Transportunternehmen 20 untergebracht sein kann, wird die angelieferten Mehrwegbehälter in einen gebrauchsfähigen Zustand versetzen und dann zu dem Lieferanten 30 weiterleiten. Wenn es sich um Pfand-Mehrwegbehälter handelt, kann die Rückzahlung des eingezahlten Pfandbetrages zwischen der Sammelstelle 40 und den Nachfragern direkt erfolgen. Üblicherweise wird aber auch das über die Internet-Plattform 10 unter Zuhilfenahme der Datenbank 12 abgerechnet, wofür die Sammelstelle eine nicht dargestellte Verbindung mit der Internet-Plattform 10 haben wird.

Für einen ordnungsgemäßen Betrieb des erweiterten Systems 1 sind eine Vielzahl von Lesegeräten 16, 16', 18, 22, 24, 24', 26, 26', 26", 28, 32 und 34 vorzusehen. Jede Datenstation des Systems muss zur Erfassung der Mehrwegbehälter 14 über mindestens ein Lesegerät verfügen. Die Lesegeräte 16, 16', 18, 22, 24, 24', 26, 26', 26", 28, 32 und 34 erfassen die Mehrwegbehälter 14 regelmäßig, insbesondere beim Eintritt in alle an dem System beteiligten Datenstationen und beim Verlassen derselben. Die Lesegeräte 16, 16', 18, 22, 24, 24', 26, 26', 26", 28, 32 und 34 erfassen eine von außen ablesbare Identifikation an den Mehrwegbehältern, die beispielsweise als optoelektronisch lesbarer Barcode oder QR-Code ausgeführt sein kann. Den Lesegeräten 16, 16', 18, 22, 24, 24', 26, 26', 26", 28, 32 und 34 können Sensoren zugeordnet sein, die über das Lesegerät zur Erfassung von Umgebungsparametern ansteuerbar sein können. Die Umgebungsparameter können beispielsweise den Benutzer des Lesegeräts, den Standort, die Zeit, die Temperatur, den Druck und die Umgebungsatmosphäre umfassen. Nachdem die Identifikation durch eines der Lesegeräte erfasst ist, überträgt das Lesegerät die erfasste Identifikation an die Datenbank 12. Die Datenbank 12 veranlasst dann das Lesegerät über die ihm zugeordneten Sensoren die weiteren Parameter zu erfassen. Alternativ ist auch möglich, dass das Lesegerät nach der Erfassung der Identifikation die weiteren Parameter bereits von sich aus bestimmt und zusammen mit der Identifikation an die Datenbank 12 überträgt. Die in der Datenbank 12 zu der Identifikation gespeicherten Parameter bilden insgesamt eine Dokumentation über den Zustand der Mehrwegbehälter 14 und damit zugleich über eventuell in den Mehrwegbehältern 14 transportierte Lebensmittel.

Die Lesegeräte können beispielsweise einfache Smartphones sein, die nach dem Prinzip des BYOD ("bring your own device") mithilfe einer entsprechenden App als Lesegerät für das System verwendet werden können. Die Erfassung der Mehrwegbehälter 14 erfolgt bei dem vorgeschlagenen erweiterten System 1 beispielsweise vor und nach jedem Transport. So wird der Mehrwegbehälter 14 nach dem Befüllen bei dem Anbieter A durch das Lesegerät 34 vor dem Transport zu dem Nachfrager N_{A} erfasst. Die von dem Lesegerät 34 erfassten Parameter werden an die Datenbank 12 übertragen und dort gespeichert. Der Nachfrager N_{A} kann einen Lesezugriff auf die ihn betreffenden Parameter des Mehrwegbehälters 14 haben. Beim Eintreffen des Mehrwegbehälters 14 bei dem Nachfrager N_{A} wird der Mehrwegbehälter 14 von dem Lesegerät 16' erfasst und die erfassten Parameter wieder an die Datenbank 12 übertragen und dort gespeichert. Der Anbieter A kann einen Lesezugriff auf die ihn betreffenden Parameter des Mehrwegbehälters 14 haben. Optional können auch während des Transports von dem Anbieter A zu dem Nachfrager N_{A} weitere in der Figur 4 nicht dargestellte Erfassungen der Parameter des Mehrwegbehälters 14 erfolgen, um die Dokumentation engmaschiger zu gestalten. Durch die Erfassung der Parameter des Mehrwegbehälters 14 und deren Speicherung in der Datenbank 12 wird eine von überall zugängliche Dokumentation des Zustands der in dem Mehrwegbehälter 14 transportierten Lebensmittel erreicht. Nach der Entnahme der Lebensmittel aus dem Mehrwegbehälter 14 kann der leere Mehrwegbehälter 14 vor dem Verlassen des Nachfragers N_{A} durch das Lesegerät 16 erfasst werden, und die erfassten Parameter können wieder in der Datenbank 12 gespeichert werden. Das Lesegerät 16 kann mit dem Lesegerät 16' identisch sein oder ein anderes bei dem Nachfrager N_{A} vorhandenes Lesegerät sein.

Der Mehrwegbehälter 14 wird von dem Nachfrager N_{A} entweder als gebrauchter Mehrwegbehälter 14 zu der Sammelstelle 40 oder, wenn der Nachfrager N_{A} über eine Möglichkeit zur Aufbereitung/Reinigung des Mehrwegbehälters 14 verfügt, direkt zu dem Lieferanten 30 gesendet. Bei der Sammelstelle 40 eintreffende Mehrwegbehälter 14 werden durch das Lesegerät 24 erfasst und die zusätzlichen Parameter wieder in der Datenbank 12 gespeichert. Beim Verlassen der Sammelstelle 40 werden Mehrwegbehälter 14 durch das Lesegerät 24' erfasst und die erfassten Parameter ebenfalls an die Datenbank übertragen und gespeichert. Das Lesegerät 24 kann mit dem Lesegerät 24' identisch sein oder ein anderes bei der Sammelstelle 40 vorhandenes Lesegerät sein. Bei dem Lieferanten 30 eintreffende Mehrwegbehälter 14 werden durch Lesegeräte 26 und 26' erfasst. Die zusätzlich erfassten Parameter werden zur Dokumentation des Weges der Mehrwegbehälter 14 wieder an die Datenbank 12 übertragen und dort gespeichert. Der Lieferant 30 überprüft den Zustand der Mehrwegbehälter 14 und stellt insbesondere ihren hygienisch einwandfreien Zustand her, bevor sie wieder durch das Lesegerät 26" erfasst werden und beispielsweise zu dem Anbieter A zur erneuten Verwendung transportiert werden. Die im Zusammenhang mit den Sensoren erfassten Parameter werden im Folgenden näher erläutert.

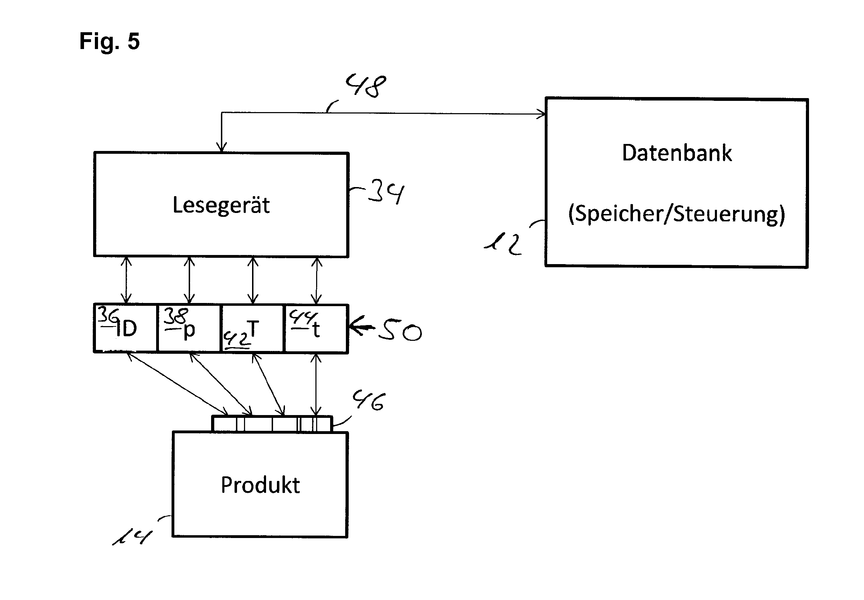

Figur 5 zeigt eine schematische Darstellung eines Lesegeräts mit zugeordneter Sensorik. Das in Figur 5 beispielhaft dargestellte Lesegerät 34 steht in einer bidirektionalen Kommunikation 48 mit der Datenbank 12. Das Lesegerät 34 kann eine Sensorik 50 umfassen und/oder mit einer solchen insbesondere bidirektional in Verbindung stehen, wie in Figur 5 angedeutet ist. Die Sensorik 50 kann beispielsweise einen optischen Sensor 36, einen Drucksensor 38, einen Temperatursensor 42 und einen Zeitsensor 44, beispielsweise eine Uhr, umfassen. Insbesondere der Zeitsensor 44 und der optische Sensor 36 können in das Lesegerät 34 integriert sein. Die Kommunikation zwischen dem Lesegerät und Sensoren einer externen Sensorik 50 kann beispielsweise mithilfe einer Funkverbindung, beispielsweise Bluetooth realisiert sein. Die vorhandene Sensorik 50 kann je nach Verwendungszweck unterschiedliche Sensoren umfassen. Manuelle Eingaben an dem Lesegerät 34 können unterstützt werden, beispielsweise um zusätzliche erweiterte Informationen, wie eine Beschädigung des Mehrwegbehälters 14, zu dokumentieren.

Das Lesegerät 34 kann den Mehrwegbehälter 14 durch die Erfassung einer Information 46 durch den optischen Sensor 36 erkennen. Die Information 46 ist in Figur 5 als von außen erkennbarer einfacher Barcode ausgeführt. Alternative Ausgestaltungen der Information 46, beispielsweise als QR-Code, sind möglich.

Durch die Erfassung der Identifikation 46 und deren Übertragung an die Datenbank 12 kann die Erfassung der weiteren über die Sensorik 50 zugänglichen Parameter durch das Lesegerät 34 ausgelöst werden. Dies kann beispielsweise aufgrund einer Anfrage durch die Datenbank 12 oder selbstständig durch das Lesegerät 34 erfolgen. Die von der Sensorik 50 erfassten Parameter werden an die Datenbank 12 übertragen und dort in Verbindung mit der Identifikation 46 gespeichert, um die Dokumentation zu bilden. Die Dokumentation kann in ihrer Gesamtheit eine Kaban-Karte bilden oder ersetzen. Die erfassten Parameter werden also zumindest in der Datenbank 12 mit der Identifikation 46 verknüpft. Dies ist symbolisch durch die Verbindungen zwischen der Sensorik 50 und der Identifikation 46 angedeutet.

Falls einer oder mehrere Sensoren der Sensorik 50 nicht ansprechbar sind, so dass eine Dokumentation nicht oder nicht vollständig möglich ist, kann das Lesegerät 34 eine Fehlermeldung ausgeben. Eine manuelle Bestätigung, dass trotz defekter Sensorik 50 das in dem Mehrwegbehälter 14 vorhandene Produkt ordnungsgemäß gelagert/transportiert wird, kann vorgesehen sein.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: erweitertes System
- 10: I nternet-Plattform
- 12: Datenbank
- 14: Mehrwegbehälter
- 16: Lesegerät
- 16': Lesegerät
- 18: Lesegerät
- 20: Transportunternehmen
- 22: Lesegerät
- 24: Lesegerät
- 24': Lesegerät
- 26: Lesegerät
- 26': Lesegerät
- 26": Lesegerät
- 28: Lesegerät
- 30: Lieferant
- 32: Lesegerät
- 34: Lesegerät
- 36: optischer Sensor
- 38: Drucksensor
- 40: Sammelstelle
- 42: Temperatursensor
- 44: Zeitsensor
- 46: Identifikation
- 46': weitere Identifikation
- 48: bidirektionale Verbindung
- 50: Sensorik
- 52: Parameter
- 54: Objekt
- 54': weiteres Objekt
- 56: Funkverbindung
- 58: optische Anzeige
- 60: System
- 62: erfasste ID
- 64: Verbindung
- 100: Verfahren

## Patentansprüche

1. Verfahren (100) zur Dokumentation von zumindest einem Parameter (52) eines Objektes (54), **dadurch gekennzeichnet,**
- **dass** eine ablesbare, das Objekt repräsentierende Identifikation (ID) (46) durch ein Lesegerät (16, 16', 18, 22, 24, 24', 26, 26', 26", 28, 32, 34) erfasst wird,
- **dass** das Lesegerät (16, 16', 18, 22, 24, 24', 26, 26', 26", 28, 32, 34) mit einer Datenbank (12) verbunden wird,
- **dass** das Erfassen der ID (46) eine Erfassung zumindest eines Parameters (52) des Objektes (54) auslöst, und
- **dass** die ID (46) zusammen mit dem zumindest einen Parameter (52) des Objektes (54) an die Datenbank (12) übertragen wird.

2. Verfahren (100) nach Anspruch 1, **dadurch gekennzeichnet, dass** die Erfassung des zumindest einen Parameters (52) des Objektes (54) durch zumindest einen Sensor (36, 38, 42, 44) erfolgt und dass Messungen des zumindest einen Sensors (36, 38, 42, 44) durch die Datenbank (12) veranlasst und ausgewertet werden.

3. Verfahren (100) nach Anspruch 1 oder 2, **dadurch gekennzeichnet, dass** der zumindest eine Sensor (36, 38, 42, 44) drahtlos ferngesteuert wird und/oder drahtlos ausgelesen wird.

4. Verfahren (100) nach einem der Ansprüche 1 bis 3, **dadurch gekennzeichnet, dass** die ID (46) als ein optoelektronisch lesbarer Barcode oder QR-Code ausgeführt wird.

5. Verfahren (100) nach einem der vorhergehenden Ansprüche, **dadurch gekennzeichnet, dass** die Verbindung des Lesegerätes (16, 16', 18, 22, 24, 24', 26, 26', 26", 28, 32, 34) zu der Datenbank (12) durch ein Smartphone hergestellt wird.

6. Verfahren (100) nach einem der Ansprüche 1 bis 4, **dadurch gekennzeichnet, dass** das Lesegerät (16, 16', 18, 22, 24, 24', 26, 26', 26", 28, 32, 34) ein Smartphone ist.

7. Verfahren (100) nach einem der vorhergehenden Ansprüche, **dadurch gekennzeichnet, dass** die Datenbank (12) jede ID mit dem mindestens einen zugeordneten zu erfassenden Parameter (52) speichert.

8. System (1; 60), das zur Ausführung des Verfahrens (100) nach einem der Ansprüche 1 bis 7 eingerichtet ist.
